# EUROPEAN PATENT APPLICATION

(11) **EP 1 375 317 A1**
(43) Date of publication of application: **02.01.2004**
(21) Application number: 02013695.8
(22) Date of filing: 20.06.2002
(51) Int. Cl.: B62D 65/00, B60G 15/06, B60G 13/00, F16F 9/54, F16F 1/32

(54) **Mounting system and method for mounting the top end of a strut of a wheel suspension on the bodywork of a motor vehicle**

(71) Applicant: Benteler Automobiltechnik GmbH, 33102 Paderborn (DE)
(72) Inventor: Bock, Hans-Jürgen, 33100 Paderborn (DE); Kordisch, Thomas, Dr., 33739 Bielefeld (DE); Nolze, Hans-Patrick, 33129 Delbrück (DE); Härtel, Wulf, Dr., 33184 Altenbeken (DE); Tröster, Thomas, Dr., 33154 Salzkotten (DE); Böke, Johannes, Dr., 31855 Aerzen (DE); Korinth, Hendrik, 33106 Paderborn (DE)
(74) Representative: Reinhold, Silke

(57) **Abstract**

In order to improve a mounting system for the top end (6) of a strut (1) of a wheel suspension on the vehicle bodywork of a motor vehicle to the effect of ensuring fast and easy initial mounting, the mounting system is to be a plug-in system comprising a plug-in element (2) arranged on one of the parts to be attached to each other, and a counter plug-in element (17) arranged on the other one of the parts to be attached to each other. Also proposed is a method for mounting, as well as a strut, and a vehicle bodywork part which acts as a strut retainer.

## Description

The invention relates to a mounting system for the top end of a strut of a wheel suspension on the bodywork of a motor vehicle, and an installation process for mounting a strut on the bodywork.

According to the state of the art, a strut is mounted on the vehicle bodywork by means of a screw connection. Such a screw connection is for example known from DE 100 04 945 A1. In said arrangement a strut comprises a coil spring, a shock absorber and a bearing box for axial support of the coil spring and the shock absorber against the vehicle bodywork. In order to mount the strut on the vehicle bodywork, the shock absorber can be braced to the bodywork by means of a nut which is screwed onto one end of the piston rod of the shock absorber. Such a screw attachment involves time-consuming installation which has to be carried out from the side of the wheel-well which is opposite the wheel.

Based on the above, it is the object of the invention to provide a mounting system and an installation method for mounting a strut to the vehicle bodywork which are less time consuming and which ensure easier installation.

This object is met by the mounting system with the characteristics of claim 1 and by an installation method with the characteristics of claim 21. Advantageous improvements are described in the subordinate claims.

The invention is based on the central idea that mounting not be achieved by a screw connection, but instead by a plug-in connection. Since there is no screw-on process, installation overall is faster and simpler. In addition, overall operational safety is enhanced.

According to the invention, the mounting system is a plug-in system which comprises a plug-in element and a counter plug-in element. The plug-in element is either mounted to the strut or to the vehicle bodywork, while the counter plug-in element is attached to the other one of the parts to be attached to each other.

Preferably the plug-in element comprises an elastically deformable element which is plugged through the counter plug-in element, which forms a plug-through passage. The plug-through passage has a narrow shape in relation to the deformable element when there is no load on said deformable element, so that during the plug-in process deformation of the plug-in element takes place.

Depending on installation options, only forces up to approx. 0.7-2.4 kN are permissible for plugging through the plug-in element. The plug-in element must be designed such that with these forces it can be completely plugged through, and is able to deform back.

Furthermore, the mounting system is advantageously characterised in that after the plug-through process, the deformable element is positioned behind the exit of the plug-through passage, preferably at a certain spacing. Back deformation of the deformable element takes place during exit. In this respect, the invention also includes the ability of the deformable element during the plug-through process being able to undergo a degree of plastic deformation. It must then be ensured that after exiting from the plug-through passage, the deformable part undergoes a degree of elastic deformation. However, deformation back to the initial state is not required, but possible for an elastic deformation.

The plug-in element comprises a positioning element as well as preferably an end stop element. By help of the positioning element there is ensured a press seat of the plug-in element; the end stop element ensures a defined plug-in depth.

According to a particularly preferred variant of an embodiment, the positioning element and the end stop element form part of a rubberised top bushing which is connected to the strut. In the centre, said top bushing comprises in particular a cylindrical or tubular supporting piece against the top end of which supporting piece the deformable element rests. In order to ensure a positive end stop effect as well as a friction seat or press seat, at least part of the external geometry of the top bushing is designed so as to correspond to at least part of the internal geometry of the counter plug-in element. During the plug-in process the top bushing is pressed into the plug-through passage up to the end stop. This friction seat or press seat ensures positioning of the plug-in element under normal conditions and retains this strut in place.

Only in those cases where the friction seat or press seat between the top bushing and the plug-through passage becomes undone (for example during extreme loads as the may occur when driving over extreme bumps in the road, or in connection with loss of shock absorber function) does the plugged-through deformable element act as a buttress. Thus, if, after the friction seat or press seat has become undone, the strut moves against the plug-in direction, the deformable element establishes contact with corresponding bearing surfaces at the exit of the plug-through passage and in this way stops or prevents further movement of the strut. The forces of approx. 7.8 kN or higher which are experienced during this, which forces vary depending on the type of vehicle and strut arrangement, can safely be absorbed by the deformable element, in particular with the use of stabilisation measures.

For safe bearing of the deformable element, the bearing surfaces at the exit of the plug-through passage are radially outward or inward projecting collars. A collar projecting outward can for example be achieved by welding a separate ring-shaped plate to the plug-through passage. A collar projecting inward is preferably made by deep-drawing the counter plug-in element.

Apart from the deformable element, the plug-in element furthermore comprises a stabiliser plate which covers and thus supports the interior partial surface of the deformable element. The stabiliser plate or washer is arranged on the side of the deformable element which points in the plug-in direction, thus providing a respective bearing surface for the nut required for a screw connection with the strut.

According to a particular variant of an embodiment, the end stop element can be variably adjusted in relation to the deformable element so that the plug-in depth and thus the spacing of the deformable element in relation to the bearing surfaces at the plug-through passage can be variable. This may be desirable in various vehicle types in order to achieve a targeted influence on the characteristic curve (force-travel) of the strut. Depending on the design of the strut and the distance (x) between the bearing surface and the deformable element, the deformation behaviour of the deformable element during bearing action can be incorporated in a targeted way into the characteristic curve of the strut.

Preferably, the deformable element is a spring element. According to a preferred embodiment it is made in a single piece from plastic or rubber and is approximately shaped as a truncated cone or a spherical segment. So as to achieve good stability characteristics, during manufacture, a metal plate is directly connected with the plastic body or rubber body, for example by means of a suitable vulcanising process. The spring body can be completely homogenous, but preferably it comprises recesses so as to support elastic deformation and so as to provide improved compressibility.

The spring element can also be a spring collar or it can essentially be in the shape of a spring collar. According to a preferred variant of an embodiment, the spring element comprises leaf sections which are arranged in a star shape in relation to each other, said leaf sections being arranged approximately so as to be plate-shaped or dish-shaped. In order to improve the bearing arrangement of the spring element on the bearing surfaces of the plug-through passage, in particular in order to increase adhesion, to prevent sliding off and to reduce or prevent noise during contact, the feet or free ends of the leaf sections are rubberised.

According to one embodiment of this spring element, the free ends of the leaf sections which are arranged so as to be star-shaped in relation to each other, comprise a mutual stabiliser ring. This increases the rigidity of the plug-in element. Any withdrawing of the deformable element against the plug-in direction is prevented in that the leaf sections hinge away upwards.

According to a first variant of an embodiment, each of the leaf sections comprises a groove on the external surface near the rubberised feed. The entirety of the groove forms a ring-shaped retainer groove for the mutual stabiliser ring. According to a second variant of an embodiment, the rubberised feet form a mutual stabiliser ring.

The plug-in element of the mounting system according to the invention is preferably mounted at the top end of the strut. The counter plug-in element is then mounted on the other one of the parts which are to be mounted to each other, i.e. on the vehicle bodywork. In this, the counter plug-in element can be connected to the wheel housing as a strut retainer, or it can be made in one piece with the wheel housing, for example by drawing a counter plug-in element which projects in a dish-shaped way.

Further details and advantages of the invention are contained in the subordinate claims and in the subsequent description in which the embodiments of the invention which are shown in the Figures, are explained in more detail. Apart from the combinations of features mentioned above, features on their own or in other combinations are also essential to the invention.

The following are shown:
- Fig. 1: a general plan of a strut with a plug-in element of a mounting system;
- Fig. 2: an exploded view of the plug-in element according to Fig. 1;
- Fig. 3: a cross section of a mounting system according to Fig. 1 with a plug-in element and a counter plug-in element during the plug-in process;
- Fig. 4: a cross-section of the mounting system according to Fig. 1 after completion of the plug-in process;
- Fig. 5: a general plan of the mounting system after completion of the plug-in process according to Fig. 4;
- Fig. 6a,b: general plans of a variant of an embodiment of the mounting system comprising a spring element in the form of a spherical segment made from elastomer or rubber; in each case comprising a counter plug-in element with bearing surfaces projecting outward or inward;
- Fig. 6c: a partial view of Fig. 6b to illustrate the interior of the spherical segment;
- Fig. 7a,b: general plans of a first improvement of the mounting system according to Fig. 1;
- Fig. 7c: a partial view of Fig. 7b to illustrate the grooves;
- Fig. 8a,b: general plans of a second improvement of the mounting system according to Fig. 1; and
- Fig. 8c: a partial view of Fig. 8b to illustrate the stabiliser ring.

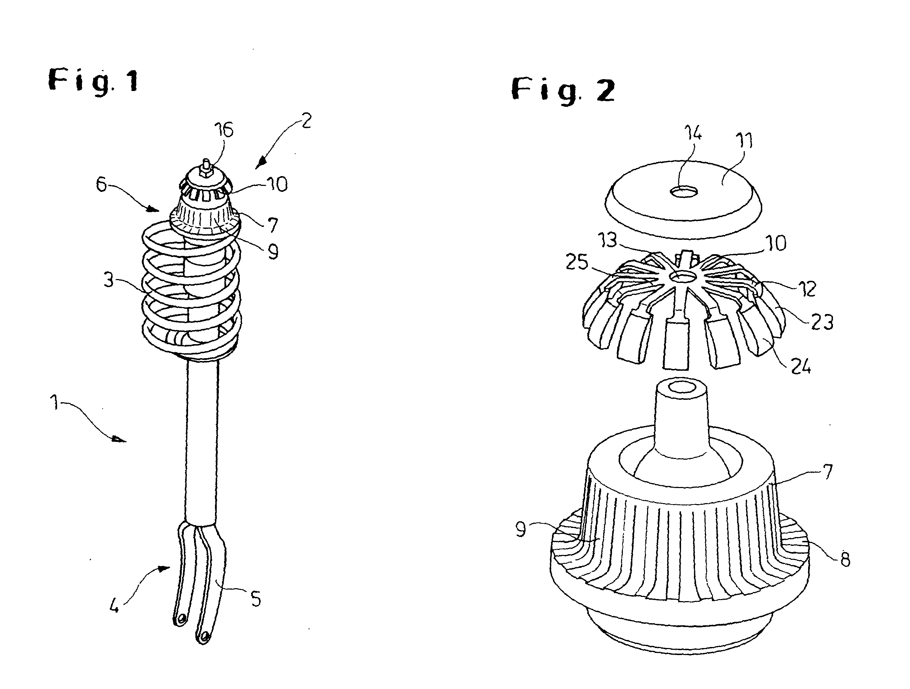

Fig. 1 is a general plan showing a strut 1 with a plug-in element 2 of a mounting system or plug-in system. The strut 1, which assumes a wheel-guiding function, comprises a shock absorber and a coil spring 3. At the bottom end 4 of the strut 1 there is a mounting fork 5 for mounting it to a wheel carrier (not shown) while at the top end 6 of the strut 1 there is the plug-in element 2. In the embodiment shown, the plug-in element 2 comprises a positioning element 7 with end stop element 8 (compare Fig. 2) in the form of the top bushing 9 of the strut 1, a deformable element 10 hereinafter called retainer spring, as well as a stabiliser plate 11 or washer. All the components shown in Fig. 1 have already been preassembled on the strut prior to the mounting process.

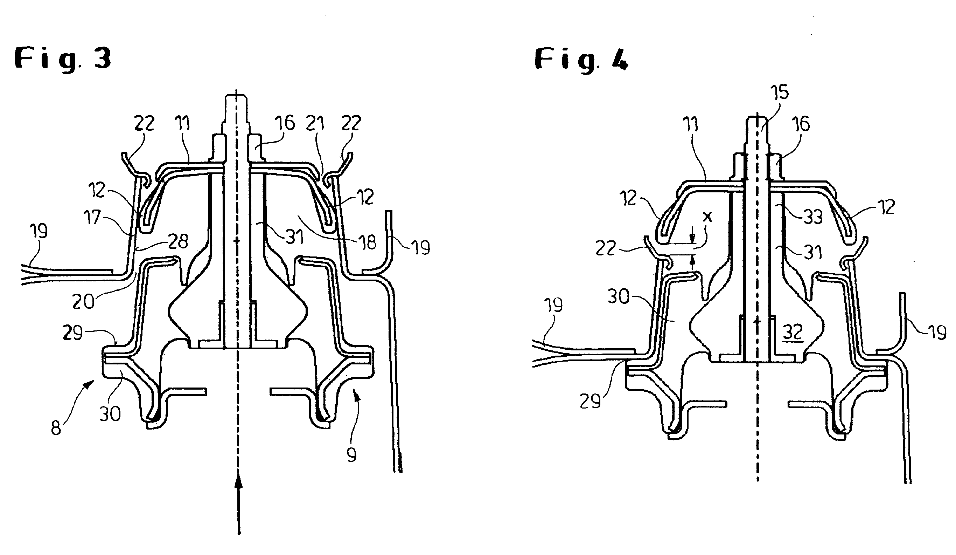

In the drawing, the retainer spring 10 shown is a variant of an embodiment comprising a spring element with leaf sections 12 (compare Fig. 2). The leaf sections 12 radiate outward from a central borehole 13. The stabilising plate 11 which extends over a central section of the retainer spring 10 also comprises a borehole 14. In order to connect the plug-in element 2 with the strut 1, the retainer spring 10 and the stabiliser plate 11 are removably attached by means of a nut 16 (compare also Fig. 4), to the top end of the piston rod 15 of the shock absorber of the strut 1 which projects through the top bushing 9. It is also imaginable that attachment is by means of a removable clip. If the strut, in particular the shock absorber, has to be deinstalled for the purpose of carrying out repair work, the system can be dismantled by undoing nut 16.

Below, the installation and mounting process or the reciprocal action between the plug-in element 2 and the counter plug-in element 17 of the mounting system is described with reference to the cross-sectional representations of Figs. 3 and 4.

The counter plug-in element 17 as a strut retainer in the wheel housing is essentially shaped as a plug-through passage 18. The counter plug-in element 17 shown here was made as a single part and was connected to a respective aperture of the wheel housing 19, thus itself becoming part of the wheel housing. The plug-through passage 18 comprises an entrance 20 and an exit 21 for the retainer spring 10. In the example shown, the plug-through passage 18 tapers off slightly from the entrance 20 to the exit 21. At the exit 21, bearing surfaces 22, in this embodiment in the form of a radially outward projecting collar, are connected to the plug-through passage 18. Overall, the diameter of the plug-through passage 18 is smaller than the diameter of the retainer spring 10 in its back deformed state.

The retainer spring is shown in detail in Fig. 2. In the embodiment shown it comprises leaf sections 12 which are arranged so as to be star-shaped in relation to each other, said leaf sections being pre-tensioned. The free ends 23 of said leaf sections 12 comprise curved rubberised feet 24 which are aligned at an angle to the essentially horizontal central leaf-section areas 25 which are covered by the stabiliser plate. Such a retainer spring 10 is preferably made from a high-strength steel, such as S600MC, or from a spring steel. A retainer spring in this form could also be made from elastomeric materials.

As shown in Fig. 3, during the plug-in process, the leaf sections 12 are compressed against the plug-in direction in that they come to rest against the internal wall 28 of the plug-through passage 18, and are pressed through said passage 18 by application of pressure. During the plug-in process, the top bushing 9 (compare Fig. 2) of the strut 1, said top bushing 9 having adapted its geometric shape, is pressed into the plug-through passage until the end stop surfaces 29 which are present on the bottom part of the top bushing 9, abut against the entrance 20 of the plug-through passage 18. The external geometry of the top bushing 9 tapers off in accordance with the bottom part of the plug-through passage 18. In this way, the plug-in element 1 is firmly positioned in the plug-through passage 18 or in the wheel housing 19 by way of a friction seat or a press seat. The top bushing 9 forms part of the strut 1; it is designed as a rubberised metal sleeve 30. A supporting piece 31 protrudes from the centre of the top bushing 9; with the bottom part 32 of said supporting piece being bulge-shaped, and with its top part 33 being essentially cylindrical. The distance between the top bushing 9 or the stop surfaces 29 and the retainer spring 10 can be defined by the length of the supporting piece 31. If the stop surfaces 29 or the collar of the top bushing 9 at the entrance 20 of the plug-through passage 18 have reached the end stop, as shown in Fig. 4, the final plug-in depth has been attained. In the embodiment shown, the retainer spring 10 projects by a play or distance x beyond the bearing surfaces 22 at the exit 21 of the plug-through passage 18, with the spacing x being in a magnitude of approx. 4.5 mm. When it exits from the plug-through passage 18, the retainer spring 10 resumes its original state.

The plug-in principle described could loosely be called an "umbrella" principle, wherein at the exit 21 of the plug-through passage 18, the retainer spring 10 opens up in the manner of an umbrella.

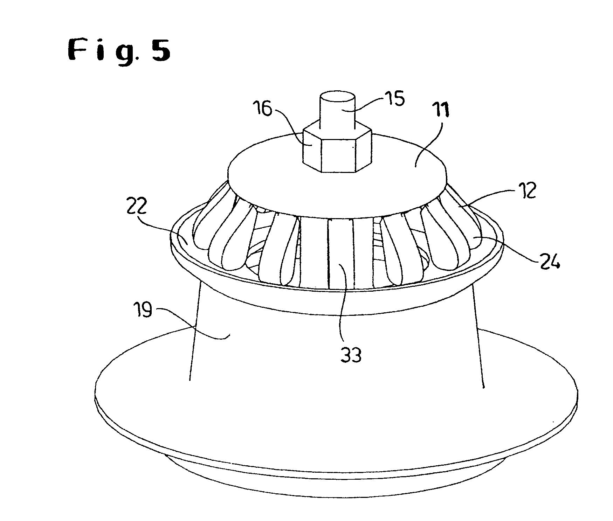

The final plug-in position shown in cross-sectional view in Fig 4 is illustrated in Fig. 5 as a general plan, wherein the plugged-in retainer spring 10 with stabiliser plate 11 projects beyond the plug-through passage as part of the wheel housing 19. The rubberised feet 24 do not rest against the bearing surfaces 22 in the form of an outward projecting collar, but instead they are positioned so as to be spaced apart. The stabiliser plate 11 increases the stiffness of the plug-in element in relation to any undesirable movement of the steel leaf sections 12 of the retainer spring 10.

The variants of the embodiments shown below, in each case depict a counter plug-in element 17 or part of the wheel housing with a welded-on external collar 34 or a support plate (in each case Fig. a) and a deep-drawn internal collar 35 or a support plate (in each case Fig. b). Below, the same reference symbols are used for the same components of the mounting system.

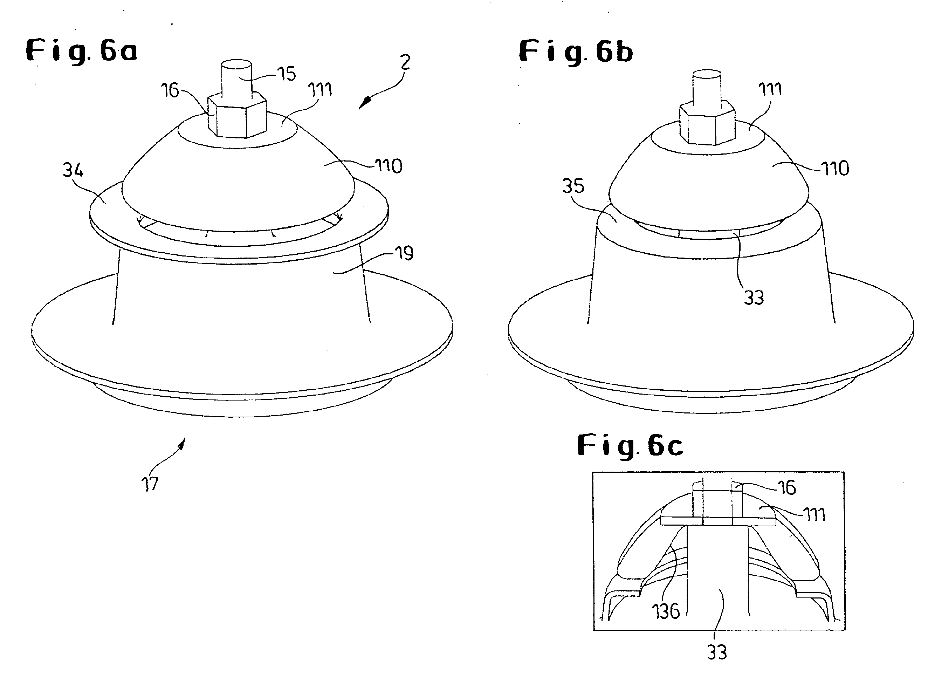

According to a first variant of an embodiment of the mounting system, as illustrated in Figs. 6a-c, the deformable element 110 comprises a vulcanised elastomer body in the form of a spherical segment which during vulcanisation is firmly connected to an upper steel plate 111. By means of suitable geometry and rigidity, the desired deformation characteristics of the elastomer body can be set. For example, recesses 136 in the plastic material are made during vulcanisation (compare Fig. 6c). Furthermore, the interior walls 136 of the spherical segment preferably comprise a concave curvature.

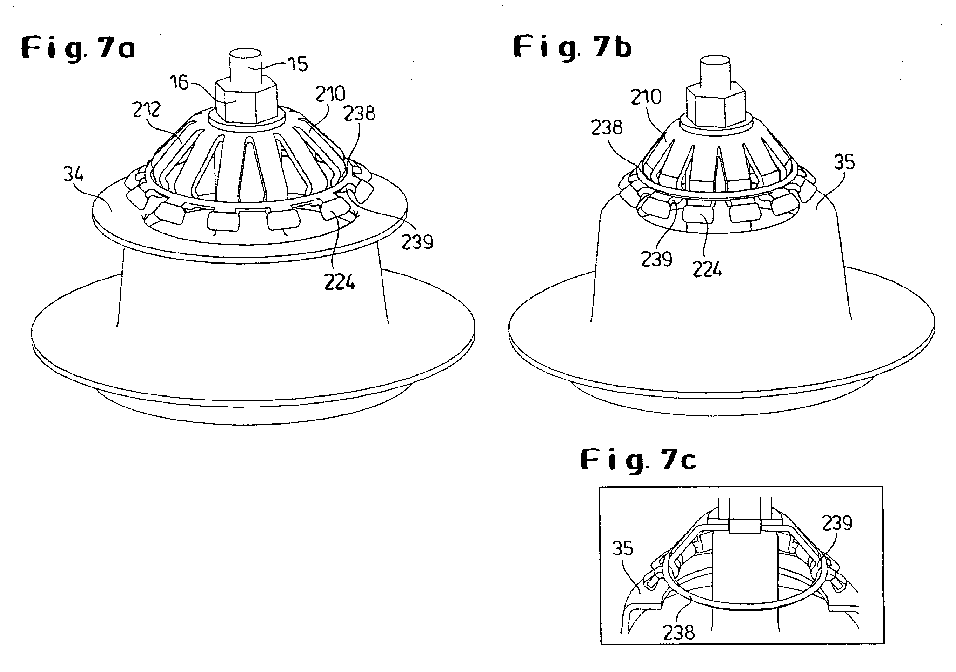

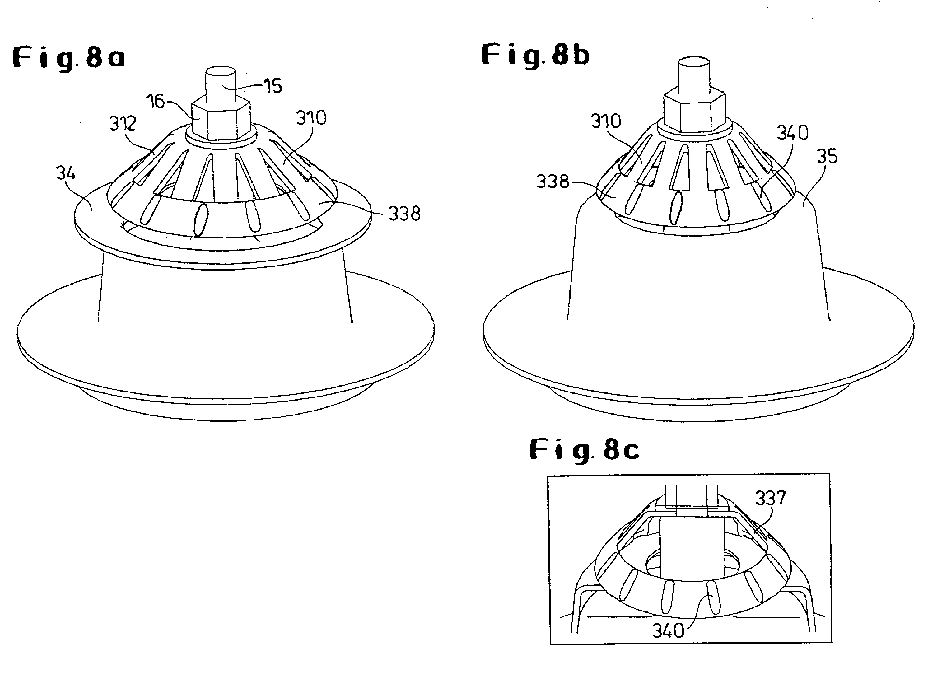

The embodiments shown in Figs. 7 and 8 comprise retainer springs 210 where the function of the stabiliser plate is essentially carried out by a stabiliser ring. This is advantageous because the stabilising plate to be made as a press part, can be replaced, thus saving both cost and weight.

The spring ring 238 prevents the leaf sections of the retainer spring 210 from hingeing away upwards if the strut moves against the plug-in direction, thus preventing the retainer spring 210 from moving downwards. To this effect, each leaf section 212 of the retainer spring 210, near the rubberised feet 224, comprises a retainer groove 239 for part of the mutual spring ring 238. The retainer groove 239 can be milled into the leaf section material or, as shown, it can be created by a curved shape of the leaf sections themselves.

According to another variant of an embodiment of a retainer spring 310, as shown in Fig. 8a-c, the rubberised feet of the leaf sections 312 are combined to form a mutual stabiliser ring 338. Manufacture is for example such that the ends of the steel leaf sections 312 or of the steel clamp as a press part are connected to a rubberised or injection moulded plastic reinforcement clip or ring 338. In order to ensure elastic deformation or folding in and out of the reinforcement clips, grooves 340 or notches extending parallel to the longitudinal axes of the leaf sections, are made in the reinforcement clip or stabiliser ring 338. In addition, the interior walls 337 in particular are concave in shape so as to indicate the direction of the deformation of the reinforcement clip during the penetration process.

Overall, the mounting system according to the invention provides for fast and easy initial mounting of a strut in a strut retainer, without the need for screwing operations. However, the invention is not restricted to mounting a strut, it can also apply to mounting a shock absorber comprising a spring which is arranged separately from said shock absorber.

### List of reference characters:

- 1.: Strut
- 2.: Plug-in element
- 3.: Coil spring
- 4.: Bottom end of strut
- 5.: Mounting fork
- 6.: Top end of strut
- 7.: Positioning element
- 8.: End stop element
- 9.: Top bushing
- 10.: Deformable element (retainer spring)
- 11.: Stabiliser plate
- 12.: Leaf section
- 13.: Centre borehole in the deformable element
- 14.: Centre borehole in the stabiliser plate
- 15.: Top end of piston rod
- 16.: Nut
- 17.: Counter plug-in element
- 18.: Plug-through passage
- 19.: Wheel housing
- 20.: Entrance of the plug-through passage
- 21.: Exit of the plug-through passage
- 22.: Bearing surfaces
- 23.: Free ends of the leaf sections
- 24.: Rubberised feet
- 25.: Centre leaf area
- 26.: Not allocated
- 27.: Not allocated
- 28.: Internal wall of the plug-through passage
- 29.: End stop surfaces
- 30.: Rubberised metal sleeve
- 31.: Supporting piece
- 32.: Bottom part of the supporting piece
- 33.: Top part of the supporting piece
- 34.: Welded on external collar
- 35.: Deep-drawn internal collar

- 110.: Deformable element as a spherical segment
- 111.: Top steel plate
- 136.: Concave internal walls

- 210.: Retainer spring
- 212.: Leaf section
- 224.: Rubberised feet
- 238.: Stabiliser ring
- 239.: Retainer groove

- 310.: Retainer spring
- 312.: Leaf section
- 337.: Concave internal walls
- 338.: Stabiliser ring
- 340.: Grooves

- Arrow: Plug-in direction

## Claims

1. A mounting system for the top end (6) of a strut (1) of a wheel suspension on the bodywork of a motor vehicle,
**characterised in that**
the mounting system is a plug-in system comprising a plug-in element (2) arranged on one of the parts to be attached to each other, and a counter plug-in element (17) attached to the other one of the parts to be attached to each other.

2. The mounting system according to claim 1,
**characterised in that**
the plug-in element (2) comprises an elastically or elastically/plastically deformable element (10), and that the counter plug-in element (17) is designed as a plug-through passage (18) comprising an entrance (20) and an exit (21) for the deformable element (10), wherein the plug-through passage (18) is designed so as to be of narrow shape in relation to the deformable element (10) when there is no load on said deformable element (10).

3. The mounting system according to claim 2,
**characterised in that**
the deformable element (10), after the plug-through process, is positioned behind the exit (21) of the plug-through passage (18) in a state deformed back in relation to the plug-in process, and during movement of the strut (1) acts as a buttress, against the plug-in direction.

4. The mounting system according to claim 3,
**characterised in that**
the deformable element (10) is positioned at a distance to the exit (21) of the plug-through passage (18).

5. The mounting system according to one of claims 3 or 4,
**characterised in that**
at its exit (21), the plug-through passage (18) comprises bearing surfaces (22) for the deformable element (10) which acts as a buttress, said bearing surfaces (22) radially projecting outward or inward in the manner of a collar (34, 35).

6. The mounting system according to one of claims 1 to 5,
**characterised in that**
the plug-in element (2) comprises a positioning element (7), wherein at least part of the external geometry of the positioning element (7) corresponds to at least part of the internal geometry of the counter plug-in element (17), so as to ensure a friction seat or a press seat.

7. The mounting system according to one of claims 1 to 6,
**characterised in that**
the plug-in element (2) comprises an end stop element (8) which abuts against the counter plug-in element (17) so as to determine a defined plug-in depth.

8. The mounting system according to claim 7,
**characterised in that**
the end stop element (8) of the plug-in element (1) is variably adjustable for variable plug-in depth.

9. The mounting system according to one of claims 6 to 8,
**characterised in that**
the positioning element (7) and/or the end stop element (8) form/s part of a top bushing (9) connected to the top end (6) of the strut; said top bushing (9) at the centre comprising a supporting piece (31) against the top end of which the deformable element (10) abuts.

10. The mounting system according to one of claims 2 to 9,
**characterised in that**
the plug-in element (2) comprises a stabiliser plate (11) for a partial surface of the deformable element (10).

11. The mounting system according to one of claims 2 to 10,
**characterised in that**
the deformable element (10) is a spring element.

12. The mounting system according to claim 11,
**characterised in that**
the spring element (110) is made in a single piece from plastic or rubber and is approximately shaped as a truncated cone or a spherical segment.

13. The mounting system according to claim 12,
**characterised in that**
the spring element (110) made of plastic or rubber comprises recesses so as to support elastic deformation against the plug-in direction.

14. The mounting system according to claim 11,
**characterised in that**
the spring element comprises leaf sections (12) which are arranged in a star shape in relation to each other, said leaf sections (12) being correspondingly pre-curved against the plug-through direction, so as to support elastic deformation; with the free ends (23) of said leaf sections (12) comprising rubberised feet (24).

15. The mounting system according to claim 14,
**characterised in that**
the free ends of the leaf sections (212, 312), which leaf sections (212, 312) are arranged in a star shape in relation to each other, comprise a mutual stabiliser ring (238, 338).

16. The mounting system according to claim 15,
**characterised in that**
at their external surfaces, near the rubberised feet (224), the leaf sections (212) comprise a groove (239) which overall forms a retainer groove for the mutual stabiliser ring (238).

17. The mounting system according to claim 15,
**characterised in that**
the rubberised feet are designed as a mutual stabiliser ring (338).

18. The mounting system according to one of claims 1 to 17,
**characterised in that**
the plug-in element (2) can be undone at the upper end (6) of the strut (1) and **in that** the counter plug-in element (17) is attached to the vehicle bodywork.

19. A strut (1) with a plug-in element (2) or a counter plug-in element (17) for a mounting system according to one of claims 1 to 18.

20. A vehicle bodywork component as a strut retainer comprising a plug-in element (2) or a counter plug-in element (17) for a mounting system according to one of claims 1 to 18.

21. An installation method for mounting the top end (6) of a strut (1) of a wheel suspension to the vehicle bodywork of a motor vehicle,
**characterised in that**
the strut (1) is attached to the vehicle bodywork by way of a plug-in process of a plug-in element (2) which is arranged on one of the parts to be attached to each other, and of a counter plug-in element (17) which is arranged on the other one of the parts to be attached to each other.

22. The installation method according to claim 21,
**characterised in that**
the plug-in element (2) is plugged to the counter plug-in element (17) by elastic or elastic/plastic deformation of at least part of the plug-in element.

23. The installation method according to claim 22,
**characterised in that**
the plug-in element (2) comprises an elastically or elastically/plastically deformable element (10), and that the deformable element (10) is plugged through the counter plug-in element (17) which is designed as a plug-through passage (18), wherein the deformable element (10) is compressed against the plug-in direction and rests against the internal wall (28) of the plug-through passage (18) and is pressed through the passage by application of pressure.

24. The installation method according to claim 23,
**characterised in that**
during the plug-in process a positioning element (7), with which the deformable element (10) is connected, is pressed into the plug-through passage (18) up to an end stop, and thus the plug-in element (2) is positioned with a friction seat or press seat, wherein the deformable element (10) has exited the plug-through passage before reaching the final position, and is positioned behind the exit (21) of the plug-through passage (18), so that the deformable element (10) in the manner of a buttress stops or prevents any movement of the strut (1) against the plug-in direction, if the friction seat or press seat is undone, with such stopping or prevention occurring by establishment of contact between the deformable element (10) and at least one bearing surface (22) of the counter plug-in element.

25. The installation method according to claim 24,
**characterised in that**
the deformable element (10) is positioned so as to be at a distance to the exit (21) of the plug-through passage (18).
